Europäisches Patentamt

European Patent Office

Office européen des brevets

(11) Publication number: **0 467 465 A1**

# EUROPEAN PATENT APPLICATION

(21) Application number: **91201823.1**

(51) Int. Cl.⁵: **C02F 1/32**

(22) Date of filing: **11.07.91**

(30) Priority: **16.07.90 NL 9001605**

(43) Date of publication of application:
**22.01.92 Bulletin 92/04**

(84) Designated Contracting States:
**AT BE CH DE DK ES FR GB GR IT LI LU NL SE**

(71) Applicant: **BERSON MILIEUTECHNIEK B.V.**
**De Huufkes 23**
**NL-5674 TL Nuenen(NL)**

(72) Inventor: **Berson, Johannes Jacobus**
**Reigerlaan 4**
**NL-5737 PH Lieshout(NL)**

(74) Representative: **Noz, Franciscus Xaverius, Ir.**
**Algemeen Octrooibureau P.O. Box 645**
**NL-5600 AP Eindhoven(NL)**

(54) **Sterilizer.**

(57) The invention relates to a sterilizer comprising various tube-like lamps extending parallel to each other and emitting ultraviolet radiation during operation. The lamps are arranged in protective tubes surrounding said lamps. The tubes extend in a vertical direction between a closed bottom plate and an upper plate forming the bottom of a box extending in an upward direction from said upper plate. In the upper plate there are provided openings by which the interior of the tubes are freely accessible.

Fig 2

EP 0 467 465 A1

The invention relates to a sterilizer comprising various tube-like lamps extending parallel to each other and emitting ultraviolet radiation during operation, said lamps being arranged in protective tubes surrounding said lamps and transmitting ultraviolet radiation.

With known sterilizers of this kind the protective tubes, which are open on both sides, and the lamps accommodated therein are usually arranged horizontally in a tubular housing, which has flanges at the opposite open sides for building the housing into a pipe conveying a liquid to be sterilized. Such known sterilizers are not suitable for being built into an open channel, gutter or ditch through which a liquid flows.

The object of the invention is to obtain a sterilizer of the above kind, which lends itself for being built into an open gutter, channel or ditch or the like.

According to the invention this can be achieved in that the tubes extend in a vertical direction between a closed bottom plate and an upper plate forming the bottom of a box extending in an upward direction from said upper plate, whilst in the upper plate there are provided openings by which the interior of the tubes are freely accessible.

By using such a construction it becomes possible to arrange the lamps vertically upright in a watercourse, ditch or the like, at a desired depth under the water surface, whilst the protective tubes accommodating the lamps remain freely accessible via the box, e.g. for exchanging lamps or the like.

With a sterilizer of the kind mentioned in the preamble, which is equipped with a cleaning device for the protective tubes which is movable to an fro along the protective tubes, a further tube is according to a further aspect of the invention arranged parallel to said protective tubes, whilst in said further tube there are arranged sensors and/or control means for the device.

When using such a construction an adequate control of the operation of the device can be obtained with a compact construction of the sterilizer, using the means arranged in the further tube. Preferably at set intervals said further tube can also be cleaned simultaneaously with the further protective tubes by means of the cleaning device which is usual per se.

The invention will be explained in more detail hereafter with reference to an embodiment of a sterilizer according to the invention diagrammatically illustrated in the accompanying Figures.

Figure 1 is a diagrammatic plan view of a sterilizer according to the invention disposed in a watercourse, ditch or the like, said sterilizer being provided with three equal groups of protective tubes.

Figure 2 is a larger-scale side view of the sterilizer illustrated in Figure 1, wherein certain parts have been left out so as to be able to show other parts.

Figure 3 is a side view of Figure 2, showing only parts of the groups of protective tubes illustrated in Figure 1.

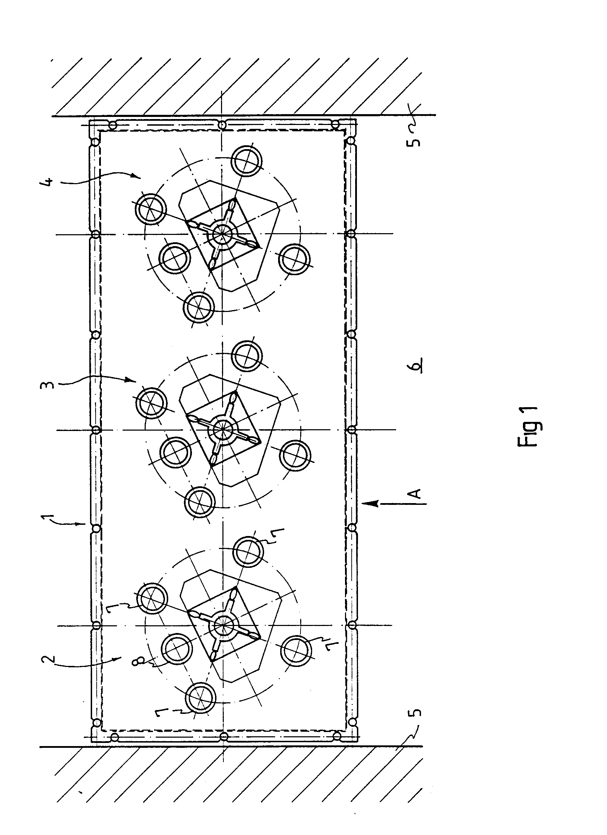

As is diagrammatically shown in Figure 1 the illustrated sterilizer comprises a frame 1, in which three equal groups 2 - 4 of tubes are arranged. The device 1 can e.g. be arranged between opposite walls 5 of a watercourse, ditch or the like 6. Water to be treated with the sterilizer will e.g. flow through said ditch, watercourse or the like in the direction indicated by the arrows A. When seen in the direction of flow the groups of tubes 2 - 4 are arranged side by side in the frame 1, therefore.

Each group of tubes comprises four vertically upright protective tubes 7, which are each surrounded by a tubular electric lamp (not shown) emitting ultraviolet radiation. Such a lamp may e.g. be a low, medium or high-pressure gas discharge lamp, in particular one which emits in the so-called UVC-range (e.g. 260 ± 40 nm).

The protective tubes 7 will be made of a material transmitting ultraviolet radiation, usually quartz.

Besides the protective tubes 7 each group furthermore comprises a further corresponding protective tube 8, preferably made of the same material as the protective tubes 7, so as to accommodate sensors and the like, as will be explained in more detail hereafter.

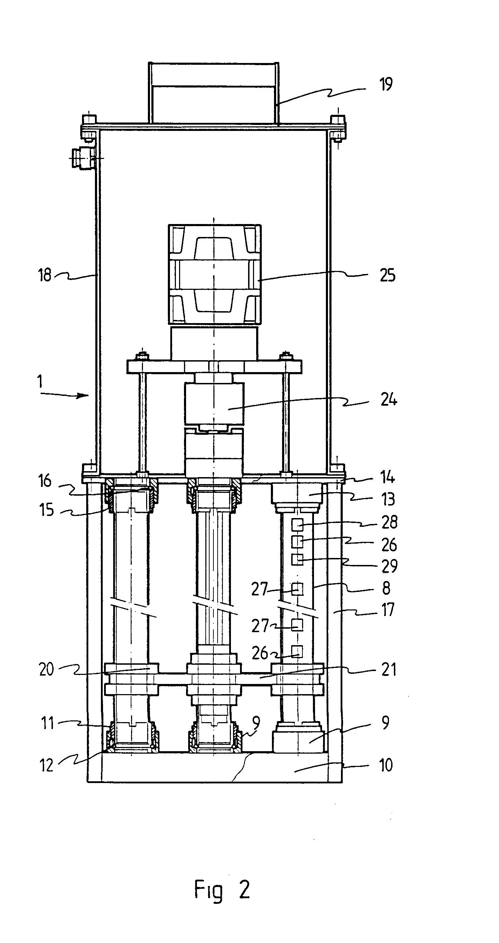

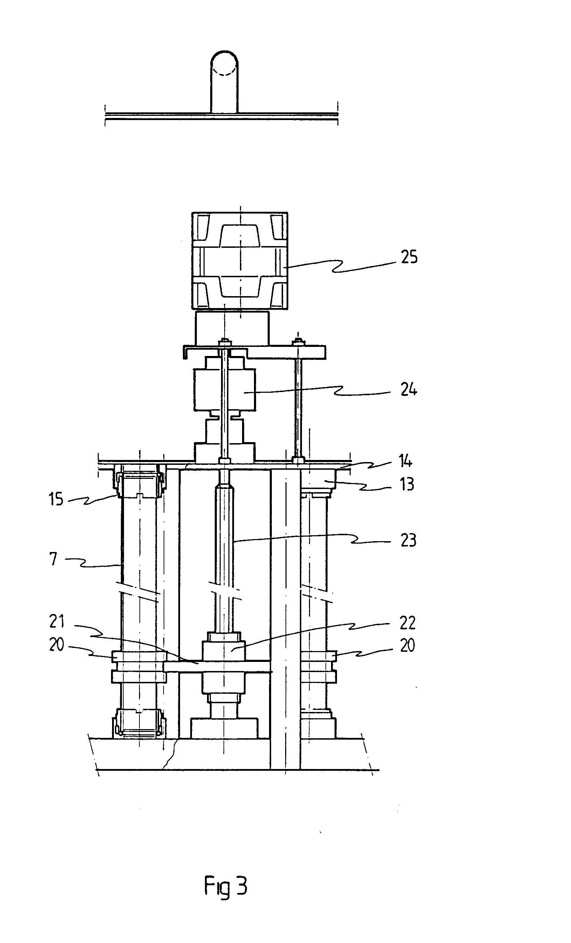

As is apparent from Figures 2 and 3 the bottom ends of the vertically upright tubes 7 and 8 are accommodated in sleeves 9, which are secured to a bottom plate 10 forming part of the frame 1. Said bottom ends of the tubes 7 and 8 are thereby fixed in said sleeves 9 so as to be liquid-tight, by means of clamping rings 11 and gaskets 12.

In a similar manner the upper ends of the tubes 7 and 8 are fixed in sleeves 13, which are secured to an upper plate 14 forming part the frame. Also the upper ends of the tubes 7 and 8 are fixed in the sleeves 13 so as to be liquid-tight, by means of clamping rings 15 and gaskets 16. The sleeves 13 are accommodated with their upper ends in corresponding openings provided in the plate 14 and further extend downwards from the plate.

The bottom plate 10 and the upper plate 14 are connected by means of columns 17 extending between said plates.

An upwardly extending box 18 is mounted on the upper side of the plate 14. The height of said box is such that said box extends above the the normal water level W in the watercourse 6. The box is closed at its upper side by a detachable cover 19.

From the above it will be apparent that the interior of the protective tubes 7 and 8 is in open communication, via the sleeves 13 supporting the upper ends of said tubes, with the interior of the box 18. After the cover 19 has been detached the lamps and the like (not shown) which are housed in the protective tubes can be removed, e.g. in case of damage or for maintenance purposes, in order to be subsequently mounted again, without it being necessary to remove the device from the watercourse for that purpose.

In order to clean the outer circumferences of the protective tubes 7 and 8 a cleaning device is provided, which is provided with a plurality of cleaning means 20, e.g. scraping means, annularly surrounding the tubes 7 and 8, said cleaning means being secured to a common supporting plate 21. Said supporting plate 21 is provided with a nut-shaped means 22, through which a screwed spindle 23 extends. Said screwed spindle 23 is connected, by means of a coupling 24, to a reversible motor 25 arranged in the box. It will be apparent that by rotating the motor 25 in the one or in the other direction the supporting plate 21 can be moved up and down, as a result of which the cleaning means 20 are moved along the protective tubes 7 and 8 in order to clean the outer circumference of said tubes.

As is diagrammatically illustrated in Figure 2 a number of sensors or similar means for checking and/or controlling the operation of the sterilizer may be arranged in the protective tube 8. Said means may thereby be secured to an elongated support (not shown), which may be inserted and/or removed through the open upper end of the tube 8 via the box 18.

Thus sensors 26 may e.g. be arranged near the ends of the tube 8, which sensors detect the presence of the cleaning device at the ends of the tube and consequently stop and/or reverse the drive of the motor 25. Preferably one or more sensor devices 27 are arranged in the protective tube, which measure the light intensity of two or more lamps arranged on both sides of the protective tube 8. As appears in particular from Figure 1 the distance between the protective tube 8 and the one lamp will thereby be smaller than the distance between the protective tube 8 and another lamp. From said measurements of the light intensity data may be derived as regards the clearness of the liquid flowing through the device.

Further means 28 may e.g. form a device which detects whether or not water is present in the interior of the device. A sensor 29 may be a temperature sensor.

It will be apparent that the various sensors and/or checking means which are arranged in the protective tube 8 may establish certain data, which may be used for controlling the sterilizer. By building said means into a tube corresponding with the protective tubes of the lamps a simple and efficient construction of the device may be obtained, whilst also the cleaning of the tubes can take place in a usual manner.

## Claims

1. Sterilizer comprising various tube-like lamps extending parallel to each other and emitting ultraviolet radiation during operation, said lamps being arranged in protective tubes surrounding said lamps and transmitting ultraviolet radiation, characterized in that the tubes extend in a vertical direction between a closed bottom plate and an upper plate forming the bottom of a box extending in an upward direction from said upper plate, whilst in the upper plate there are provided openings by which the interior of the tubes are freely accessible.

2. Sterilizer according to claim 1, characterized in that the sterilizer comprises mercury vapor lamps of the high-pressure or medium-pressure type.

3. Sterilizer according to claim 1 or 2, characterized in that the sterilizer comprises a mechanical cleaning device, which is displaceable along the protective tubes.

4. Sterilizer according to claim 3, characterized in that in the box there is arranged a motor for driving the cleaning device.

5. Sterilizer comprising various tube-like lamps extending parallel to each other and emitting ultraviolet radiation during operation, said lamps being arranged in protective tubes surrounding said lamps, as well as a cleaning device for the tubes, said cleaning device being movable to and fro along the protective tubes, characterized in that parallel to the tubes there is arranged a further tube, whilst in said further tube there are arranged sensors and/or control means.

6. Sterilizer according to claim 5, characterized in that said further tube can be cleaned with the same device as the tubes accommodating the lamps.

7. Sterilizer according to claim 5 or 6, characterized in that the tubes are freely accessible at at least one end.

8. Sterilizer according to any one of the claims 5

EP 0 467 465 A1

- 7, characterized in that the sensors and/or control means are provided on a support means, which is arranged in the corresponding tube to be removable from said tube.

Fig 1

Fig 2

Fig 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 899 056  (ELLNER)<br>* column 3, line 59 - line 65; figure 3 * *<br>– – – | 1,6 | C 02 F 1/32 |
| A | US-A-4 367 410  (WOOD)<br>* column 6, line 5 - line 10; claim 2 * *<br>– – – | 1 | |
| A | KORRESPONDENZ ABWASSER, Volume 36, nr. 1, January 1989, St. Augustin, DE; P. GELZHÄUSER: durch UV-Bestrahlung<br>* Chapter 3.2 * *<br>– – – – – | 1 | |
| | | | **TECHNICAL FIELDS SEARCHED (Int. Cl.5)** |
| | | | C 02 F |

**The present search report has been drawn up for all claims**

| Place of search | Date of completion of search | Examiner |
|---|---|---|
| The Hague | 04 November 91 | KASPERS H.M.C. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document